# EUROPEAN PATENT SPECIFICATION

(11) **EP 1 688 192 B1**
(45) Date of publication and mention of the grant of the patent: **09.05.2007**
(21) Application number: 06425055.8
(22) Date of filing: 02.02.2006
(51) Int. Cl.: B21D 7/024

(54) **Bending machine with a controlled-return bending die**
Biegemaschine mit einer kontrolliert rückstellbaren Biegeform
Machine de cintrage avec un support circulaire retournable sous contrôle

(30) Priority: 04.02.2005 IT RM20050049
(43) Date of publication of application: 09.08.2006
(73) Proprietor: CML International S.p.A., 03030 Piedimonte San Germano (FR) (IT)
(72) Inventor: Caporusso, Alessandro, 03030 Piedimonte San Germano (FR) (IT); Giorgio, Mario, 03030 Piedimonte San Germano (FR) (IT)
(74) Representative: Cipriani, Guido

(56) References cited:
- DE-B- 1 178 678
- US-A- 2 312 122
- US-A- 3 016 943
- US-A- 4 063 441

## Description

The present invention relates to a bending machine with a controlled-return bending die according to the preamble of claim 1 (see e.g. DE-A-1178678).

Bending machines have a bending device comprising a bending die or matrix and a bend arm, both rotating about an axis and being provided with co-operating counteracting members. These counteracting members clamp a section of a workpiece immediately after the section to be bent, according to a feeding direction of the workpiece in the bending machine. The workpiece is bent by causing both the matrix and the bend arm to move around the axis from an initial position to an end position. When a bending operation ends, the matrix is caused to return to its initial position.

Conventionally, a mechanism that is built-in or connected to a stationary part of the bending machine causes the matrix to return to its initial position. This implies some drawbacks, which are joined to the fact that said mechanism outside the bend arm might interfere with the bending operation.

In order to solve this problem, a matrix returning means has been provided being housed in the bend arm in the form of a spring element. However, this solution, according to which the matrix is automatically returned, has been abandoned because its operation is dangerous. Among other things, an automatic return of the matrix by means of a spring element is not always assured owing to the friction, the weight of the matrix and other causes, also in consideration that the spring member cannot be calibrated.

An object of the present invention is to allow a bending machine matrix to return to its start or initial position of bending operation safely and reliably by a control, whether the control is operated by a worker or whether the control is part of an automatic cycle.

Another object of the invention is to provide a mechanism for returning the matrix to its initial position that does not hinder the bending operation.

These objects are achieved by a bending machine with a controlled-return bending die as defined in claim 1.

The present invention will be described referring to a preferred embodiment thereof in connection with the enclosed drawings, in which:
Figure 1 shows a fragmentary perspective view of a bending machine in which the present invention is embodied, only a matrix and a bend arm of the bending machine being represented in an initial position of bending operation;
Figure 2 shows a perspective view of the bend arm in Figure 1, with parts being removed to show return means of the matrix to the initial operation position;
Figure 3 shows the bend arm in Figure 1 in a top plan view; and
Figure 4 shows an exploded perspective view of return means for the matrix in a bending machine according to the invention.

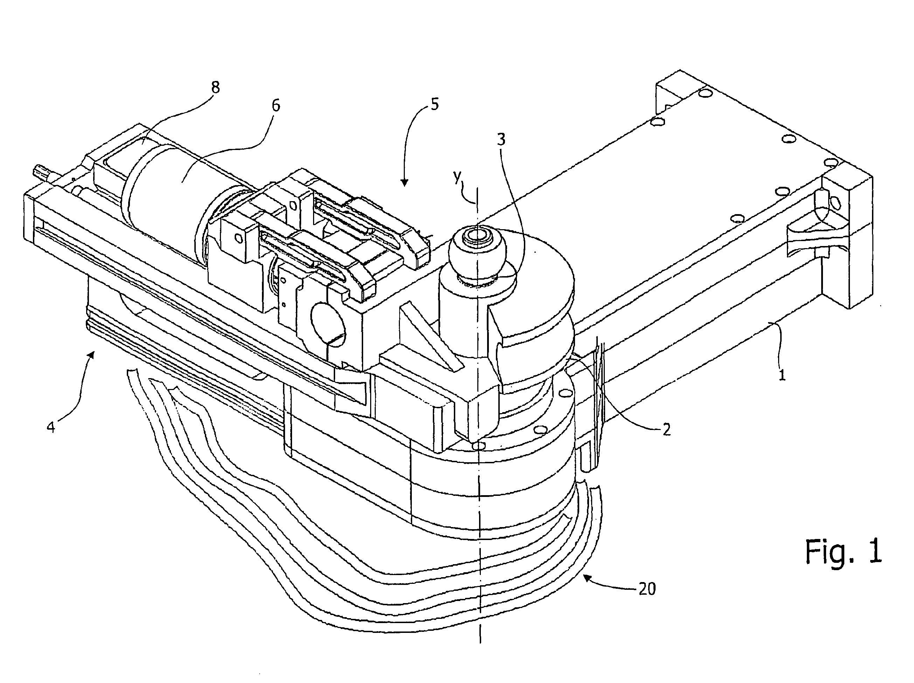

With reference to the drawings, in Figure 1 there is shown a bending machine in a fragmentary perspective view. On a support bench 1, which is connected to the rest of the bending machine (not shown), a bending die or matrix 2 is mounted around a spindle 3 having an axis y. A bend arm generally indicated as 4, is able to turn around the same axis y. A vice 5 using a double-acting cylinder 6 is mounted on the bend arm 4. The vice 5 is an example of counteracting members for a workpiece, generally a pipe, to be bent (not shown). The counteracting members being adapted to clamp a section of pipe to be bent in its start or initial bending position can be different from those shown here. The same vice 5 connects the bend arm 4 to the matrix 2.

After a set angle rotation of the bend arm 4 and the matrix 2, connected thereto, by driving means (not shown), a pipe bending operation on the matrix is performed for a pipe section corresponding to set angle.

Hoses feeding a pressured fluid and electric wires are shown in Figure 1 and generally indicated as 20. Two of the hoses 20 serve the double-acting cylinder 6, while one of them is for a single-acting cylinder that will be described below.

According to the invention, the matrix 2 is returned to the start position by return means acting on the matrix when the pipe bending operation is finished, after the bent pipe is removed from the bending machine. The return means is operated by a worker at the bending machine or by a control system.

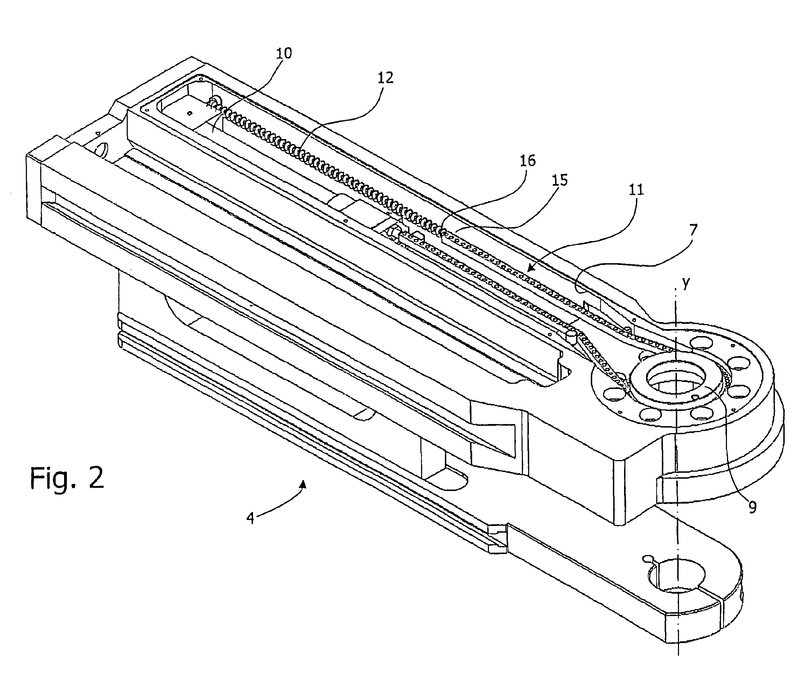

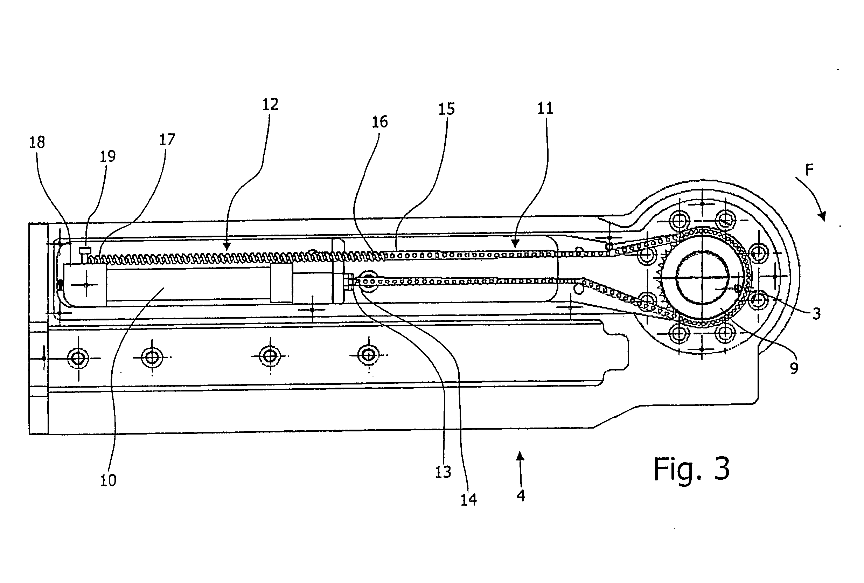

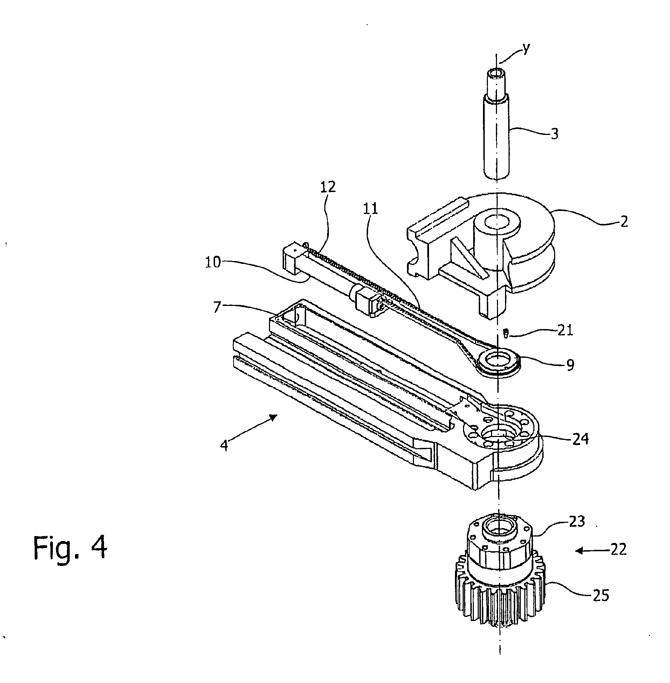

This return means is housed in a compartment 7, as shown in Figure 2, which is a fragmentary perspective view of the bending device. The compartment 7 is provided in an upper part of the bend arm 4 and is closed by a removable cover element 8 (Figure 1). The return means acts on a power transmission element that is rotatable around the axis y since it is connected to the spindle 3, as best shown in the top plan view of Figure 3 and in the exploded view of Figure 4. The power transmission element, which is further connected to the matrix, is a ring gear 9.

In particular, according to an embodiment thereof, the controlled return means comprises a single-acting cylinder 10, a section of flexible transmission 11 and an elastic stretching member 12. Such an embodiment is depicted in particular in Figure 4, where a dowel for connecting the ring gear 9 to the matrix 2, which is freely rotatable around the spindle 3, is indicated as 21. The spindle 3 acts as a locating pivot and is supported on a driving shaft 22. The driving shaft 22 has a polygonal portion 23 designed to engage a correspondent seat 24 in the bend arm 4, and also a spur gear 25 being engaged with driving means for turning the bend arm 4. Said driving means, which can be configured variously, is not described in detail since it is conventional.

The single-acting cylinder 10 is fixed inside the compartment 7 in the bend arm 4. A free end 13 of the piston rod of the single-acting cylinder 10 is connected to an end 14 of the section of flexible transmission 11. The flexible transmission 11 is preferably a chain running on the ring gear 9, whose teeth mesh with chain links. The flexible transmission 11, beyond the ring gear 9, is attached with the other end 15 thereof to an end 16 of the elastic stretching member 12. The other end 17 of the elastic stretching member 12 is fixed by a pin 19 to a portion 18 being in any way rigidly connected to a fixed portion of the bend arm 4 inside the compartment 7, e.g. the portion 18 being integral with the same single-acting cylinder 10. Finally, the elastic stretching member 12 counteracts the piston rod of the single-acting cylinder.

The ring gear 9 is the power transmission element that is keyed to the spindle 3 and co-operates with the section of flexible transmission 11. The ring gear 9 is able to transform a traction applied to the flexible transmission 11 by the single-acting cylinder 10 into a rotation of the matrix 2 in a direction opposite the rotation caused by driving means of the bend arm 4, in order to return the matrix to the start position of bending operation. This can be performed only after a bent workpiece has been removed from the bending machine.

The single-acting cylinder 10 has its axis substantially perpendicular to the axis y of the spindle 3 and the free end 13 of the its piston rod is directed toward the spindle 3.

The elastic stretching member 12 is e.g. a traction resistant helical spring.

In the operation for bending a section of workpiece (not shown), the bend arm 4 is rotated by driving means of the bending machine, such as an electric or hydraulic motor, which are not described in detail, neither depicted in figures. When the bend arm 4 rotates around the axis y, the piston rod of the single- acting cylinder is pulled out by means of the section of flexible transmission 11 with a consequent shortening of the elastic stretching member 12. When the worker wants the matrix 2 to return to the start position of bending operation, the single-acting cylinder is fed with fluid which displaces the piston rod inside. The displacement of the piston rod transmits the traction to the section of flexible transmission 11 that being engaged with the ring gear 9 causes the matrix 2 to be rotated in the direction of the arrow F (see Figure 3) to return it to the start position shown in Figure 1.

The invention has been described by way of example, and variations and changes can be made without departing from the scope of the enclosed claims.

## Claims

1. A bending machine with a controlled-return bending die, including a bending die or matrix (2) mounted around a spindle (3) having an axis y, a bend arm (4) pivotable about the same axis y, and co-operating counteracting members for clamping a section of workpiece to be bent in a start position of the matrix (2) and the bend arm (4), a workpiece bending operation being performed for a workpiece section corresponding to an angle of rotation of the bend arm (4) and the matrix (2) around the axis y by driving means, **characterised in that** said bend arm (4) carries on itself a controlled return means able to return said matrix (2) to its start position at the end of said workpiece bending operation.

2. The bending machine according to claim 1, **characterised in that** said controlled return means comprises:
- a single-acting cylinder (10) being fixed on said bend arm (4) and having a piston rod with a free end (13);
- a section of flexible transmission (11) having one end (14) being connected to the free end (13) of said piston rod, and the other end (15) being attached to an elastic stretching member (12) in one end (16) thereof, the other end (17) of the elastic stretching member (12) being fixed to a portion (18) rigidly connected to said bend arm (4), the elastic stretching member (12) counteracting the piston rod of the single-acting cylinder (10);
- a power transmission element (9) that is connected to the matrix (2) and co-operating with said section of flexible transmission (11), the power transmission element (9) being able to transform a traction movement applied to said section of flexible transmission (11) into a rotation movement of the matrix (2) around said axis y in a direction opposite the rotation that has been caused by said driving means to bend the workpiece, in order to return said matrix (2) to a start position.

3. The bending machine according to any of claims 1 and 2, **characterised in that** said controlled return means are housed in a compartment (7), which is provided in an upper part of said bend arm (4) and closed by a removable cover element (8).

4. The bending machine according to claim 2, **characterised in that** said section of flexible transmission (11) is a link chain, and the power transmission element (9) that is connected to the matrix (2) and co-operates with said section of flexible transmission (11), is a ring gear.

5. The bending machine according to claim 2, **characterised in that** said elastic stretching member (12) is a traction resistant helical spring.

## Patentansprüche

1. Biegemaschine mit einem Biegewerkzeug mit gesteuerter Rückkehr, welche ein Biegewerkzeug oder eine Matrize (2), die um eine Spindel (3), welche eine Achse y aufweist, herum montiert ist, einen Biegearm (4), der um die gleiche Achse y schwenkbar ist, und kooperierende entgegenwirkende Bauteile zum Einklemmen eines Abschnittes des zu biegenden Werkstückes in einer Startposition der Matrize (2) und des Biegearms (4) aufweist, wobei ein Werkstück-Biegevorgang für einen Werkstückabschnitt, der einem Drehwinkel des Biegearmes (4) und der Matrize (2) um die Achse y entspricht, durch ein Antriebsmittel durchgeführt wird, **dadurch gekennzeichnet, dass** der Biegearm (4) auf sich selbst ein gesteuertes Rückkehrmittel trägt, das dazu ausgelegt ist, die Matrize (2) am Ende des Werkstück-Biegevorganges in ihre Startposition zurückzubringen.

2. Biegemaschine gemäß Anspruch 1, **dadurch gekennzeichnet, dass** das gesteuerte Rückkehrmittel aufweist:
- einen einfach wirkenden Zylinder (10), der an dem Biegearm (4) befestigt ist und eine Kolbenstange mit einem freien Ende (13) aufweist;
- einen Abschnitt einer flexiblen Übertragung (11), bei der ein Ende (14) mit dem freien Ende (13) der Kolbenstange verbunden ist und das andere Ende (15) an einem elastischen Dehnbauteil (12) an einem Ende (16) desselben befestigt ist, wobei das andere Ende (17) des elastischen Dehnbauteiles (12) an einem Abschnitt (18), der fest mit dem Biegearm (4) verbunden ist, befestigt ist, wobei das elastische Dehnbauteil (12) der Kolbenstange des einfach wirkenden Zylinders (10) entgegenwirkt;
- ein Antriebsübertragungselement (9), das mit der Matrize (2) verbunden ist und mit dem Abschnitt der flexiblen Übertragung (11) kooperiert, wobei das Antriebsübertragungselement (9) dazu ausgelegt ist, eine Zugbewegung, die auf den Abschnitt der flexiblen Übertragung (11) ausgeübt wird, in eine Rotationsbewegung der Matrize (2) um die Achse y in einer Richtung entgegengesetzt zu der Drehung, die von dem Antriebsmittel verursacht wurde, um das Werkstück zu biegen, umwandelt, um die Matrize (2) in eine Startposition zurückzubringen.

3. Biegemaschine gemäß Anspruch 1 oder 2, **dadurch gekennzeichnet, dass** das gesteuerte Rückkehrmittel in einem Abteil (7), das in einem oberen Teil des Biegearmes (4) vorgesehen ist und durch ein abnehmbares Abdeckelement (8) geschlossen wird, untergebracht ist.

4. Biegemaschine gemäß Anspruch 2, **dadurch gekennzeichnet, dass** der Abschnitt der flexiblen Übertragung (11) eine Gliederkette ist und dass das Antriebsübertragungselement (9), das mit der Matrize (2) verbunden ist und mit dem Abschnitt der flexiblen Übertragung (11) kooperiert, ein Tellerrad (engl.: ring gear) ist.

5. Biegemaschine gemäß Anspruch 2, **dadurch gekennzeichnet, dass** das elastische Dehnbauteil (12) eine gegen Zugbelastung beständige Schraubenfeder ist.

## Revendications

1. Machine de cintrage avec un outil de cintrage réversible sous contrôle, comprenant un outil ou une matrice de cintrage (2) monté autour d'une broche (3) ayant un axe y, un bras de cintrage (4) pouvant pivoter autour de ce même axe y, et des éléments de réaction en coopération pour serrer une section d'une pièce à usiner à cintrer dans une position de départ de la matrice (2) et du bras de cintrage (4), une opération de cintrage de la pièce à usinerétant exécutée pour une section de la pièce à usiner correspondant à un angle de rotation du bras de cintrage (4) et de la matrice (2) autour de l'axe y par des moyens d'entraînement, **caractérisée en ce que** ledit bras de cintrage (4) porte un moyen de retour sous contrôle à même de renverser ladite matrice (2) dans sa position de départ à la fin de ladite opération de cintrage de la pièce à usiner.

2. Machine de cintrage selon la revendication 1, **caractérisée en ce que** ledit moyen de retour sous contrôle comprend :
- un vérin à simple effet (10) fixé sur ledit bras de cintrage (4) et ayant une tige de piston avec une extrémité libre (13) ;
- une section de transmission flexible (11) ayant une extrémité (14) reliée à l'extrémité libre (13) de ladite tige de piston, et l'autre extrémité (15) fixée à un élément tendeur élastique (12) dans une extrémité (16) de celui-ci, l'autre extrémité (17) de l'élément tendeur élastique (12) étant fixée à une partie (18) reliée de façon rigide avec ledit bras de cintrage (4), l'élément tendeur élastique (12) réagissant à la tige de piston du vérin à simple effet (10) ;
- un élément de transmission de puissance (9) qui est relié à la matrice (2) et qui coopère avec ladite section de transmission flexible (11), l'élément de transmission de puissance (9) étant à même de transformer un mouvement de traction appliqué à ladite section de transmission flexible (11) en un mouvement de rotation de la matrice (2) autour dudit axe y dans une direction opposée à la rotation qui a été induite par lesdits moyens d'entraînement pour cintrer la pièce à usiner, de manière à retourner ladite matrice (2) dans une position de départ.

3. Machine de cintrage selon l'une quelconque des revendications 1 et 2, **caractérisée en ce que** ledit moyen de retour sous contrôle est logé dans un compartiment (7) qui est prévu dans une partie supérieure dudit bras de cintrage (4) et fermé par un élément de couvercle amovible (8).

4. Machine de cintrage selon la revendication 2, **caractérisée en ce que** ladite section de transmission flexible (11) est une chaîne à maillons et l'élément de transmission de puissance (9) qui est relié à la matrice (2) et qui coopère avec ladite section de transmission flexible (11) est une couronne dentée.

5. Machine de cintrage selon la revendication 2, **caractérisée en ce que** ledit élément tendeur élastique (12) est un ressort hélicoïdal résistant à la traction.
